# EUROPÄISCHE PATENTSCHRIFT

(11) **EP 1 614 526 B1**
(45) Veröffentlichungstag und Bekanntmachung des Hinweises auf die Patenterteilung: **22.08.2007**
(21) Anmeldenummer: 05009926.6
(22) Anmeldetag: 06.05.2005
(51) Int. Cl.: B29C 67/00

(54) **Verfahren zur Herstellung von grossen Bauteilen aus Teilsegmenten und zum Zusammenfügen diesen Teilsegmenten**
Method for producing large parts from intermediate parts and for assembling said intermediate parts
Procédé de fabrication de grandes pièces à partir de pièces intermédiaires et d'assemblage de ces pièces intermédiaires

(30) Priorität: 06.07.2004 DE 102004032559
(43) Veröffentlichungstag der Anmeldung: 11.01.2006
(73) Patentinhaber: Dr.Ing. h.c. F. Porsche Aktiengesellschaft, 70435 Stuttgart (DE)
(72) Erfinder: Thiele, Frank, 71229 Leonberg-Hoefingen (DE); Lehner, Klaus-Dieter, 71299 Wimsheim (DE)

(56) Entgegenhaltungen:
- WO-A-97/14549
- DE-A1- 3 711 470
- DE-A1- 19 545 167
- US-A1- 2002 125 613
- US-A1- 2004 075 196
- TREGO L: "RAPID PROTOTYPING" AUTOMOTIVE ENGINEERING, SOCIETY OF AUTOMOTIVE ENGINEERS. WARRENDALE, US, Bd. 104, Nr. 9, September 1996 (1996-09), Seiten 110-111, XP000627071 ISSN: 0098-2571

## Beschreibung

Die Erfindung bezieht sich auf ein Verfahren zum Fixieren und Herstellen von Bauteilen, insbesondere von Fahrzeugbauteilen, nach dem Oberbegriff des Anspruchs 1.

Aus der DE 299 07 262 U1 ist eine Vorrichtung zum Herstellen eines dreidimensionalen Bauteils mittels eines Rapid-Prototyping-Verfahrens bekannt, bei dem das Material des Bauteils schichtweise mittels eines Laserstrahls verfestigt wird. Des Weiteren ist aus der DE 195 07 881 A1 ein Stereolithographieverfahren bekannt, bei dem Stützen für ein Bauteil schichtweise hergestellt werden, indem beispielsweise von Computerdaten gesteuerte Laserstrahlen ein Fotopolymer gemäß einem bestimmten Muster an der Oberfläche aushärten. Aus der DE 195 45 167 A1 ist ein Verfahren zum Herstellen von Bauteilen bekannt, wobei anhand eines Datensatzes des Bauteils durch Stereosintern aus Polystyrol ein Modell des Bauteils hergestellt wird und durch das Stereosintern werden mehrere Teilstücke des Bauteils erstellt, die nach einem Tauchen in Wachs zu einem Gesamtbauteil zusammengesetzt werden. Des Weiteren ist aus der US 2002/0125613 A1, gemäß dem Oberbegriff des Anspruchs 1, ein Verfahren zum herstellen von mindestens zwei Bauteilen bekannt, welche miteinander verbindbar sind und im Rapid-Prototyping-Verfahren hergestellt werden und unmittelbar aus einem virtuellen Modell entstehen, welches mit Hilfe eines Programms erstellt wird.

Aufgabe der Erfindung ist es, ein Verfahren zu schaffen, mit dem mehrere getrennte Segmente von Bauteilen herstellbar und in einfacher Weise lagegenau zu einem einzigen Bauteil zusammensetzbar sind.

Diese Aufgabe wird erfindungsgemäß durch die Merkmale des Anspruchs 1 gelöst. Weitere vorteilhafte Merkmale beinhalten die Unteransprüche.

Durch begrenzte Abmessungen von Bauplattformen einer Stereolithographieanlage ist es erforderlich, größere Bauteile in Teilsegmenten herzustellen. Nachteilig ist hierbei, dass diese Teilsegmente nach dem eigentlichen Bauprozess aufwendig zusammengefügt werden müssen, wobei Ungenauigkeiten entstehen können, welche die Qualität des Bauteils stark beeinträchtigen. Durch das Verfahren nach der Erfindung wird es in einfacher Weise ermöglicht, die Einzelsegmente des Bauteils jeweils passgenau zu fixieren und somit können die einzelnen Segmente genau gefügt werden, wobei dieses Verfahren auch eine Genauigkeitskontrolle der Bauteile erlaubt.

Hierdurch können einerseits die in einer Stereolithographieanlage im Rapid-Prototyping-Verfahren hergestellten Bauteile mit einem verlorenen Stützensystem bzw. Unterbau und andererseits gleichzeitig Einzelstützen zur Aufnahme des gesamten gefügten Bauteils in einer realen Einbaulage gefertigt werden. Um dies zu erreichen, ist nach der Erfindung insbesondere vorgesehen, dass das Bauteil in zwei getrennten Bauteil-Segmenten mit dem verlorenem Stützenunterbau - eine räumlich reale Einbaulage einnimmt - herstellbar ist und die beiden getrennten Bauteile auf separat hergestellten Einzelstützen derart zusammensetzbar sind, dass die Bauteile eine definierte Positionierung, wie auf dem verlorenen Stützenunterbau, einnehmen können.

Die einzelnen Verfahrensschritte nach der Erfindung sind folgende. In einem ersten Verfahrensschritt wird der Stützenunterbau als gitterartiges Stützenelement vorab vor Erstellung der beiden Bauteile unterhalb dieser in Folge hergestellt, auf den die Bauteile getrennt, ganzflächig unterstützt in der realen räumlichen Einbaulage gehalten sind. Gleichzeitig mit der Herstellung des Stützenunterbaus sowie der beiden getrennten Bauteile werden in einem separaten Verfahrensschritt die Einzelstützen zur Aufnahme der beiden Bauteile in der realen Einbaulage hergestellt. In einem weiteren Verfahrensschritt wird der Stützenunterbau manuell von den Bauteilen entfernt und die Einzelstützen werden dann auf einer Basisplattform mit einer zur Aufnahme der Bauteile in der realen Einbaulage - den Stützenunterbau nachbildend - angeordnet und in einem weiteren Verfahrensschritt werden dann die beiden getrennt hergestellten Bauteile manuell auf die auf der Basisplattform angeordneten und die Einbaulage nachbildenden Einzelstützen gesetzt und zum Verbinden der Bauteile diese zu einem einzigen Bauteil manuell zusammengeführt und miteinander verbunden.

Hierdurch wird in vorteilhafter Weise nach der Erfindung erreicht, dass die eine relativ große Länge aufweisenden Bauteile, eine reale Einbaulage einnehmend, auf dem verlorenen Stützenunterbau im Rapid-Prototyping-Verfahren aufgebaut werden. Der Stützenunterbau ist insofern verloren, weil dieser manuell von den Bauteilen entfernt wird und die Bauteile auf die Einzelstützen gesetzt werden.

Diese Einzelstützen werden in einem Datenformat generiert und im Rapid-Prototyping-Bauprozess zusammen mit den beiden Bauteilen gefertigt, wobei die stirnseitigen Auflageflächen der Einzelstützen in ausgewählten Abstützpunkten die Geometrie der aufzulegenden Bauteile aufweisen. Auch sind die Einzelstützen entsprechend der ausgewählten Abstützpunkte definiert auf der Basisplattform durch ein Aufstecken mittels Zapfen plazierbar.

Diese Einzelstützen werden nach der Erfindung entsprechend der korrespondierenden Abstützfläche bzw. dem korrespondierenden Abstützpunkt am Bauteil generiert, so dass das Bauteil in gleicher Lage wie auf dem Stützenunterbau angeordnet ist und zusammengesetzt werden kann, unter Vermeidung eines fehlerhaften Zusammenfügens.

Im Einzelnen wird nach der Erfindung das Verfahren in mehreren Folgeschritten durchgeführt, wobei in einem CAD-Programm in einem ersten Schritt eine Konstruktion des Einzelstützengrundkörpers und der Basisplattform erfolgt und in einem weiteren Schritt wird dann eine virtuelle Positionierung der einzelnen Komponenten vorgenommen, dem sich in einem weiteren Schritt die Erstellung der Einzelstützen durch Subtraktion anschließt. In weiteren Schritten werden dann die Bauteile in einem Programm erstellt und danach werden in einem Prozess maschinell diese Bauteile mit dem Stützenunterbau erstellt, dem sich in einem weiteren Schritt die manuelle Positionierung der Einzelstützen auf der Basisplattform anschließt und danach dann ein manuelles Fixieren und Fügen der Bauteile zu einem einzigen Bauteil erfolgt.

Ein Ausführungsbeispiel der Erfindung ist in den Zeichnungen dargestellt und wird im Folgenden näher beschrieben.

Es zeigen
- Fig. 1: eine schaubildliche Darstellung von zwei auf Einzelstützen zusammengefügten Bauteilen auf einer Basisplattform,
- Fig. 2: ein Diagramm mit der Abfolge der einzelnen Verfahrensschritte,
- Fig. 3: eine schaubildliche Darstellung von einer dem Rapid-Prototyping-Verfahren in einer Stereolithographieanlage hergestellten Bauteils mit verlorenem Stützenunterbau sowie Einzelstützen,
- Fig. 4: ein auf Einzelstützen angeordnetes Bauteil,
- Fig. 5: eine Ansicht auf eine Basisplattform mit definiert plazierten Einzelstützen, und
- Fig. 6: eine Folgedarstellung über eine Subtraktion von in einem Datenformat generierten Einzelstützen.

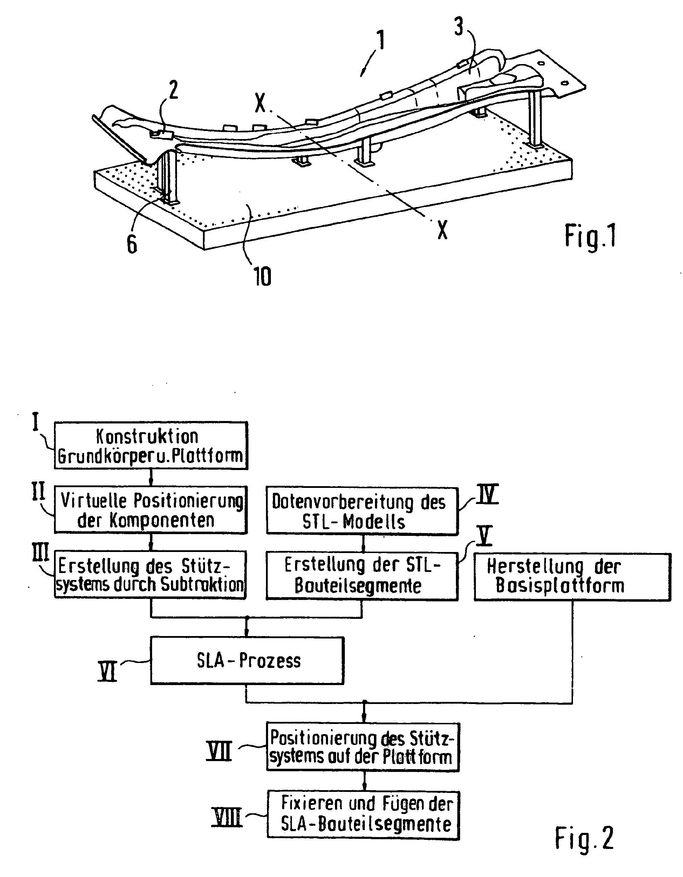

Damit trotz begrenzter Abmessung von einer Bauplattform in einer Stereolithographieanlage auch größere Bauteile hergestellt werden können, ist es oftmals notwendig, die größeren Bauteile in Teilsegmente zu zerlegen und herzustellen. Wie in Fig. 1 näher gezeigt, besteht das beispielsweise gezeigte Bauteil 1 aus zwei Bauteilsegmenten 2 und 3, die zusammengesetzt werden und dann das Bauteil 1 ergeben. Es können auch mehr als zwei Teilsegmente hergestellt werden.

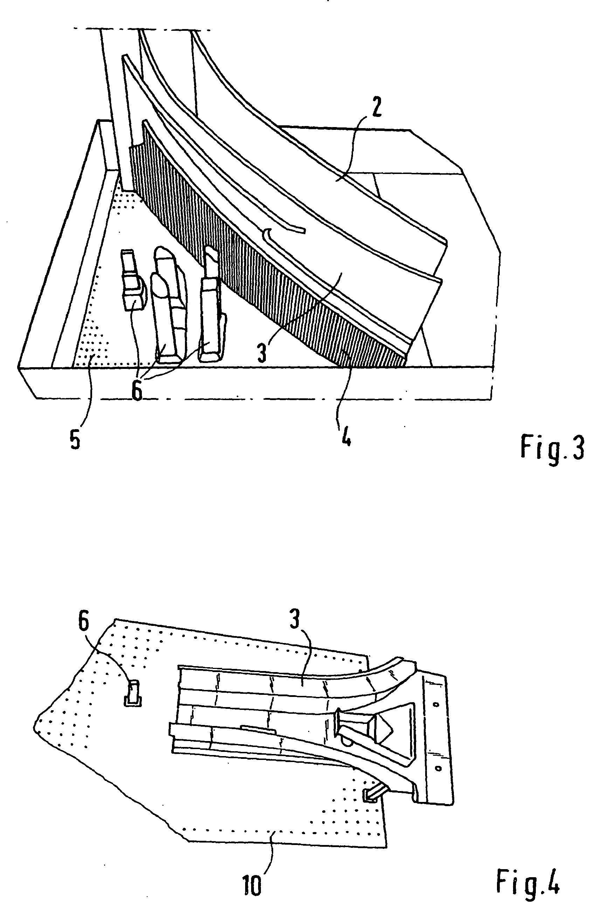

Wie in Fig. 3 näher dargestellt, werden die beiden Bauteile 2 und 3 getrennt voneinander mit dem gitterartigen Stützensystem, genannt Stützenunterbau 4, auf der Bauplattform 5 im Rapid-Prototyping-Verfahren hergestellt. Der Stützenunterbau 4 stellt die reale räumliche Einbaulage der Bauteile 2, 3 im Fahrzeug dar. Gleichzeitig werden Einzelstützen 6 nach dem gleichen Verfahren hergestellt, wie sie in Fig. 3 dargestellt sind.

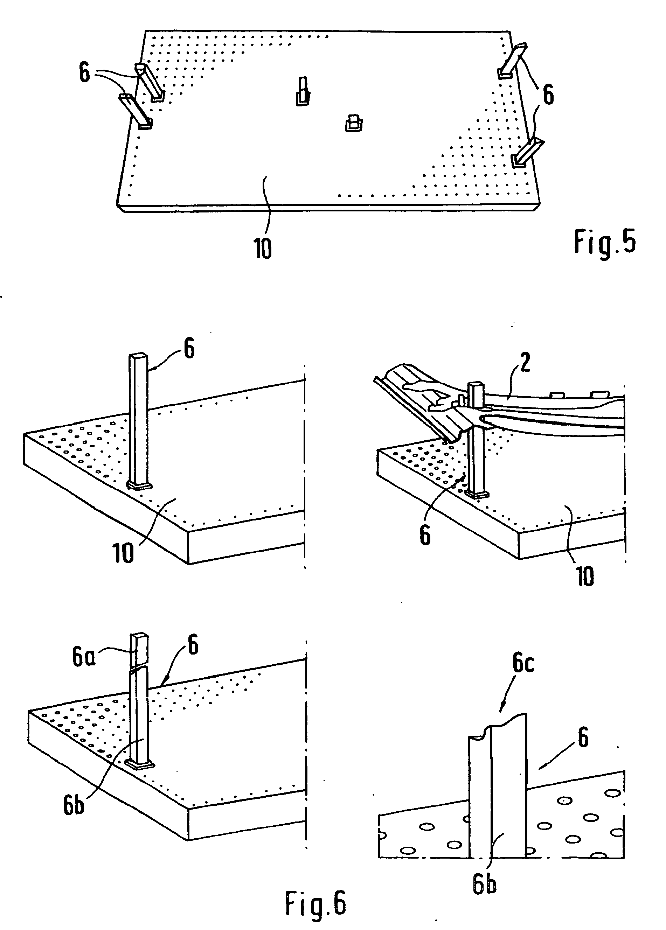

Diese Einzelstützen 6 werden, wie in Fig. 6 gezeigt, durch ein CAD-Programm generiert und durch Subtraktion erstellt. Das heißt, bei einem Stützen-Grundkörper, bestehend aus einem Ober- und Unterteil 6a und 6b, wird das Oberteil 6a gelöscht und das verbleibende Unterteil 6b ist mit einer stirnseitigen Abstützfläche 6c versehen, welche geometrisch einer definierten Abstützfläche am Bauteil 2, 3 entspricht.

Wenn die Bauteile 2, 3 mit dem Stützenunterbau 4 und den Einzelstützen 6 fertiggestellt sind, wird der Stützenunterbau 4 von den Bauteilen 2 und 3 manuell entfernt. Danach werden die Einzelstützen 6 auf einer Basisplattform 10 entsprechend der definierten Abstützorte am Bauteil 2 und 3 angeordnet bzw. gesteckt, wozu Bohrungen in der Basisplatte 10 vorgesehen sind, in welcher die mit Zapfen versehenen Einzelstützen 6 eingesteckt werden, vorzugsweise sind mindestens vier Zapfen an jeder Einzelstütze 6 vorgesehen.

Auf die Einzelstützen 6 werden dann die beiden Bauteile 2, 3 aufgelegt, wobei die Einzelstützen 6 eine Lage einnehmen, wie der die Bauteile 2, 3 ganzflächig aufnehmende Stützenunterbau 4, nur dass die Einzelstützen 6 jetzt partiell die Bauteile 2, 3 lagern. Die Bauteile 2, 3 werden nach dem Zusammensetzen miteinander beispielsweise in der Linie X-X verbunden, wie Fig. 1 näher zeigt.

In einem Diagramm gem. Fig. 2 sind die einzelnen Folgeschritte des Verfahrens zusammengefasst dargestellt.

So erfolgt in einem ersten Schritt I mittels eines Programms am Computer die Konstruktion der Einzelstützen-Grundkörper 6 mit der Basisplattform 10, dann folgt in einem weiteren Schritt II eine virtuelle Positionierung der einzelnen Komponenten 2, 3 und 6, dann werden in einem weiteren Schritt III die Einzelstützen 6 erstellt. Danach werden in weiteren Schritten IV und V die Bauteile 2, 3 in einem Computerprogramm vorbereitet und erstellt und nachfolgend werden die Bauteile 2, 3 mit dem gitterförmigen Stützenelement 4 im Rapid-Prototyping-Verfahren maschinell hergestellt. Dann erfolgt mit Schritt VII eine manuelle Plazierung der Einzelstützen 6 auf der Basisplattform 10, wie beispielsweise die Fig. 5 zeigt. Hiernach folgt im Schritt VIII das Fixieren und Zusammenfügen der beiden Bauteile 2 und 3 zu einem Bauteil 1. Die Herstellung der Basisplattform kann vor dem Schritt VII erfolgen.

Mit dem entwickelten Fixierungssystem ist es möglich, große Rapid-Prototyping-Bauteile genau zu fügen. Das Verfahren ist dabei schnell und kostengünstig. Die konstruierten Modelle der Stützengrundkörper und der Basisplattform lassen sich in jedem Prozess wieder verwenden. Auch die gefertigte Basisplattform lässt sich immer wieder einsetzen. Da die generierten Stützenkörper im Datenformat vorhanden sind, können diese im jeweiligen Rapid-Prototyping-Bauprozess mitgefertigt werden. Außerdem kann das System ebenfalls als Geometrie-Kontrollsystem verwendet werden. Voraussetzung hierfür ist die Existenz von CAD-Daten des zu kontrollierenden Bauteils.

## Patentansprüche

1. Verfahren zum Fixieren und Herstellen von Bauteilen (2, 3), aus einem Harzmaterial, die in einer Stereolithographieanlage in einem Rapid-Prototyping-Verfahren in aufeinander folgenden Verfahrensschritten getrennt und schichtweise aus einem Harzkörper herstellbar sind, **dadurch gekennzeichnet, dass** das Bauteil (1) in zwei getrennten Bauteil-Segmenten (2, 3) mit verlorenem Stützenunterbau (4) - eine räumlich reale Einbaulage einnehmend - herstellbar ist und die beiden Bauteile (2, 3) auf separat hergestellten Einzelstützen (6) derart zusammensetzbar sind, dass die Bauteile (2, 3) eine definierte Positionierung, wie auf dem verlorenen Stützenunterbau einnehmen, wobei die Einzelstützen (6) in einem Datenformat generiert werden und im Rapid-Prototyping-Bauprozess zusammen mit den beiden Bauteilen (2, 3) fertigbar sind und stirnseitige Auflageflächen (6c) der Einzelstützen (6) in ausgewählten Abstützpunkten die Geometrie der aufzulegenden Bauteile (2, 3) aufweisen, wobei die Einzelstützen (6) entsprechend der ausgewählten Abstützpunkte definiert auf der Basisplattform (10) durch ein Aufstecken mittels Zapfen plaziert werden.

2. Verfahren nach Anspruch 1, **dadurch gekennzeichnet, dass** in einem ersten Verfahrensschritt ein Stützenunterbau (4) als gitterartiges Stützenelement vorab vor Erstellung der beiden Bauteile (2, 3) unterhalb dieser in Folge hergestellt wird, auf den die Bauteile (2, 3) getrennt, ganzflächig unterstützt in der realen räumlichen Einbaulage gehalten sind, gleichzeitig mit der Herstellung des Stützenunterbaus (4) der beiden Bauteile (2, 3) werden in einem separaten Verfahrensschritt die Einzelstützen (6) zur Aufnahme der beiden Bauteile (2, 3) in der realen Einbaulage, in einem weiteren Verfahrensschritt wird dann der Stützenunterbau (4) manuell von den Bauteilen (2, 3) entfernt und die Einzelstützen (6) werden auf einer Basisplattform (10) mit einer zur Aufnahme der Bauteile (2, 3) in der realen Einbaulage - den Stützunterbau (4) nachbildend - angeordnet und in einem weiteren Verfahrensschritt werden die beiden getrennt hergestellten Bauteile (2, 3) manuell auf die auf der Basisplattform (10) angeordneten und die Einbaulage nachbildenden Einzelstützen (6) gesetzt und zum Verbinden der Bauteile (2, 3) diese zu einem einzigen Bauteil (1) zusammengeführt und miteinander verbunden.

3. Verfahren nach den Ansprüchen 1 oder 2, **dadurch gekennzeichnet, dass** in einem CAD-Programm in einem ersten Verfahrensschritt (I) eine Konstruktion des EinzelStützengrundkörpers (6) und der Basisplattform (10) und in einem weiteren Schritt (II) dann eine virtuelle Positionierung der einzelnen Komponenten vorgenommen wird, dem sich in einem weiteren Schritt (III) die Erstellung der Einzelstützen durch Subtraktion anschließt und in weiteren Schritten (IV, V) werden dann die Bauteile (2, 3) in einem Programm erstellt und danach werden in einem Prozess maschinell die Bauteile (2, 3) mit Stützenunterbau (4) erstellt, dem sich in einem weiteren Schritt (VI) die manuelle Positionierung der Einzelstützen (6) auf der Basisplattform (10) anschließt und danach in weiteren Schritten VII und VIII sich ein manuelles Fixieren und Fügen der beiden Bauteile (2, 3) zu einem einzigen Bauteil (1) anschließt.

## Claims

1. A method of fixing and manufacturing parts (2, 3) made of a resin material, which parts (2, 3) can be manufactured separately and in layers from a resin body in stereolithography apparatus by a rapid-prototyping method in consecutive method steps, **characterised in that** the part (1) can be manufactured from two separate segments (2, 3) with a lost supporting substructure (4) so as to adopt a real spatial installation position, and the two parts (2, 3) can be assembled on separately manufactured individual supports (6) in such a way that the parts (2, 3) adopt a defined position as on the lost supporting substructure, wherein the individual supports (6) are generated in a data format and can be manufactured in the rapid-prototyping construction process together with the two parts (2, 3), and end bearing surfaces (6c) of the individual supports (6) at selected supporting points have the geometry of the parts (2, 3) to be placed on top, wherein the individual supports (6) are placed in a defined manner, in accordance with the selected supporting points, on the base platform (10) and are attached thereto by means of pins.

2. A method according to claim 1, **characterised in that**, in a first method step, before production of the two parts (2, 3), a supporting substructure (4) in the form of a grid-type supporting member underneath the two parts (2, 3) is manufactured first of all, on which supporting substructure (4) the parts (2, 3) are held separately and supported over their entire surface in the real spatial installation position, in a separate method step the individual supports (6) for receiving the two parts (2, 3) in the real installation position are manufactured simultaneously with the manufacture of the supporting substructure (4) for the two parts (2, 3), in a further method step the supporting substructure (4) is then manually removed from the parts (2, 3) and the individual supports (6) for receiving the parts (2, 3) in the real installation position are arranged on a base platform (10) and simulate the supporting substructure (4), and in a further method step the two separately manufactured parts (2, 3) are manually placed on the individual supports (6) which are arranged on the base platform (10) and simulate the installation position and, for connection of the parts (2, 3), the latter are assembled to form a single part (1) and are joined together.

3. A method according to claim 1 or claim 2, **characterised in that** the basic body (6) for the individual supports and the base platform (10) are constructed in a CAD program in a first method step (I), and in a further step (II) the individual components are then virtually positioned, which is followed in a further step (III) by the production of the individual supports by subtraction, and in further steps (IV, V) the parts (2, 3) are then generated in a program and thereafter the parts (2, 3) are mechanically produced with a supporting substructure (4) in one process, which is followed in a further step (VI) by the manual positioning of the individual supports (6) on the base platform (10) and thereafter followed in further steps VII and VIII by manual fixing and joining of the two parts (2, 3) to form a single part (1).

## Revendications

1. Procédé de fixation et de fabrication de pièces (2, 3) d'un matériau de résine qui sont séparées au cours d'étapes de procédé consécutives dans une installation de stéréolithographie dans un procédé de prototypage rapide et pouvant être fabriquées par couches à partir d'un corps résineux, **caractérisé en ce que** la pièce (1) peut être fabriquée en deux segments de pièce (2, 3) séparés avec infra-structure à piliers perdue 4 (adoption d'une position de montage spatiale réelle) et que les deux pièces (2, 3) séparées puissent être assemblées sur des piliers individuels (6) fabriqués séparément de façon à ce que les pièces puissent adopter un positionnement défini comme sur l'infra-structure à piliers perdue, les piliers individuels (6) étant générés dans un format de données et conçus dans le procédé de prototypage rapide avec les deux pièces (2, 3) et des surfaces d'appui frontales (6c) des piliers individuels (6) présentant en des points d'appui sélectionnés, la géométrie des pièces (2, 3) à poser dessus, les piliers individuels (6) pouvant également être placés de manière définie selon les points d'appui sélectionnés sur la plateforme de base (10) par un montage au moyen de chevilles.

2. Procédé selon la revendication 1, **caractérisé en ce que** dans une première étape de procédé, une infra-structure à piliers (4) est d'abord fabriquée comme élément de pilier en forme de grille avant la fabrication des deux pièces (2, 3) sous celles-ci dans l'ordre, sur lequel les pièces (2, 3) sont maintenues séparées soutenues sur toute leur surface dans la position de montage spatiale réelle, parallèlement à la fabrication de l'infra-structure à piliers (4) ainsi que des deux pièces (2, 3), les piliers individuels (6) destinés à recevoir les deux pièces (2, 3) sont fabriqués dans la position de montage réelle dans une étape de procédé séparée, au cours d'une étape ultérieure, l'infra-structure à piliers (4) est éloignée manuellement des pièces (2, 3) et les piliers individuels (6) sont alors placés sur une plateforme de base (10) avec une position de montage réelle pour recevoir les pièces (2, 3), reproduisant l'infra-structure à piliers (4) et dans une autre étape de procédé, les deux pièces (2, 3) fabriquées séparément sont alors posées manuellement sur les piliers individuels (6) placés sur la plateforme de base (10) et reproduisant la position de montage et pour relier les pièces (2, 3), celles-ci sont rapprochées et reliées entre elles manuellement en une seule pièce (1).

3. Procédé selon la revendication 1 ou 2, **caractérisé en ce que** dans un logiciel de CAO, une construction du corps de base de piliers individuels (6) et de la plateforme de base (10) est réalisée dans une première étape (I) et dans une autre étape (II), un positionnement virtuel des différents composants est réalisé que vient relayer dans une autre étape (III) la conception des piliers individuels par une soustraction et au cours d'étapes ultérieures (IV, V), les pièces (2, 3) sont conçues dans un logiciel et réalisées mécaniquement dans un procédé avec l'infra-structure à piliers (4) que vient relayer dans une autre étape (VI) le positionnement manuel des piliers individuels (6) sur la plateforme de base (10) et ensuite une fixation et un assemblage manuel des pièces (2, 3) en une seule pièce (1) a lieu au cours d'étapes ultérieures VII et VIII.
